(19) Europäisches Patentamt
European Patent Office
Office européen des brevets

(11) **EP 3 835 546 B1**

(12) **EUROPEAN PATENT SPECIFICATION**

(45) Date of publication and mention
of the grant of the patent:
**31.05.2023 Bulletin 2023/22**

(51) International Patent Classification (IPC):
**F01D 5/14** *(2006.01)* **F01D 25/16** *(2006.01)*
**F01D 25/30** *(2006.01)*

(21) Application number: **20208526.2**

(52) Cooperative Patent Classification (CPC):
**F01D 5/145; F01D 25/162; F01D 25/30;**
F05D 2250/12

(22) Date of filing: **19.11.2020**

(54) **STRUT STRUCTURE WITH STRIP FOR EXHAUST DIFFUSER AND GAS TURBINE HAVING THE SAME**

STREBENSTRUKTUR MIT LEISTE FÜR EINEN ABGASDIFFUSOR UND GASTURBINE DAMIT

STRUCTURE DE PLAQUE D'APPUI AVEC BANDE DE DIFFUSEUR D'ÉCHAPPEMENT ET TURBINE À GAZ LA COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.12.2019 KR 20190167192**

(43) Date of publication of application:
**16.06.2021 Bulletin 2021/24**

(73) Proprietor: **Doosan Enerbility Co., Ltd.**
**Seongsan-gu**
**Changwon-si, Gyeongsangnam-do 51711 (KR)**

(72) Inventors:
• **CHO, Seung Hyun**
**51208 Gyeongsangnam-do (KR)**
• **LEE, Ik Sang**
**04997 Seoul (KR)**

(74) Representative: **Ter Meer Steinmeister & Partner**
**Patentanwälte mbB**
**Nymphenburger Straße 4**
**80335 München (DE)**

(56) References cited:
**EP-A1- 0 970 292** **EP-A1- 2 679 793**
**EP-A2- 3 543 463** **WO-A1-2005/100752**
**US-A1- 2013 164 488** **US-A1- 2014 060 062**

## Description

## CROSS-REFERENCETO RELATED APPLICATION

This application claims priority to Korean Patent Application No. 10-2019-0167192, filed on December,13, 2019.

## BACKGROUND

## Field

Apparatuses and methods consistent with exemplary embodiments relate to a strut structure of an exhaust diffuser, and more particularly, to a strut structure of an exhaust diffuser, which has strips disposed in a plurality of columns on a strut for an exhaust diffuser of a gas turbine in a flow direction of an exhaust gas, thereby alleviating a separated flow phenomenon of the exhaust gas passing through the strut, and forms several vortices, thereby alleviating a pressure loss.

## Description of the Related Art

A turbine is a machine for converting the energy owned by an operation fluid such as water, gas, or steam into mechanical work, and generally refers to a turbo-type machine which has multiple blades or vanes placed on a circumference of a rotational body and exhales a steam or a gas thereto to rotate the blades or the vanes at a high speed with an impulse force or a reaction force.

The turbine is classified into a gas turbine using high-temperature and high-pressure combustion gas as the operation fluid, a steam turbine using steam as the operation fluid, or the like.

The gas turbine includes a housing, a rotor rotatably provided inside the housing, a compressor configured to receive a rotational force from the rotor to compress air, a combustor configured to mix fuel with the air compressed by the compressor and ignite the fuel and the air to generate a combustion gas, and a turbine configured to obtain a rotational force from the combustion gas generated by the combustor to rotate the rotor.

Further, the combustion gas passing through the turbine passes through an exhaust diffuser and is discharged to the outside of the gas turbine.

US 2014/060062 A1 presents a strut of an exhaust diffuser of a gas turbine, the strut includes a foil part; one or more shape memory devices attached to the foil part, each shape memory device being structured to change its shape in accordance with a temperature of that shape memory device; and one or more memory device heaters, each memory device heater being structured to apply heat to at least one shape memory device in accordance with a shape actuating signal provided to that memory device heater, the shape actuating signal being provided from an external source.

US 2013/164488 A1 presents an airfoil and method of fabricating an airfoil including a first and a second side coupled together at a leading and a trailing edge and extending there between. The airfoil includes a plurality of first chord sections having a first chord length and extending outward from one of the first side or second side of the airfoil at the leading edge and a plurality of second chord sections having a second chord length and extending outward from the one of the first side or the second side of the airfoil at the leading edge. The leading edge including spaced-apart wave-shaped projections defining a waveform.

WO 2005/100752 A1 presents a high drag vortex generator for inhibiting the formation of boundary layer gas flow is mounted in a duct having a strong adverse pressure gradient with high speed gas flow over a primary aerodynamic. The vortex generator includes a mounting for supporting the high drag vortex generator at a spatial interval in the high speed gas flow above the primary aerodynamic surface. The high drag vortex generator is supported from the mounting and extends from the mounting in the high speed gas flow less than the full distance to the primary aerodynamic surface. Each high drag vortex generator includes first and second vanes. The first and second vanes have flow confining components at substantial right angles to one another. The vanes flow confining components deflect fluid flow towards and/or away from the primary aerodynamic surface inhibiting boundary layer formation downstream of the vortex generator.

EP 0 970 292 A1 presents that in a conduit constituting the outlet from turbo machinery such as a turbine or compressor, stall gas high static pressure and low velocity is collected. This stall gas is then routed through struts - preferably teardrop shaped - to more central low static pressure and high velocity gas flow areas. At these areas, the gas is discharged, preferably through multiple manifold openings. Mixing of the collected high static pressure, low velocity stall gas with the low static pressure, high velocity main stream gas occurs. Turbine noise, vibration, and back pressure are decreased with resulting improvements of efficiency. Variations are illustrated including adaptation of gas flow transfer utilizing turning vanes, fairings, rectangular duct turns, and struts for placement in turbine turbo machine outlets having high turbulence or variable swirl.

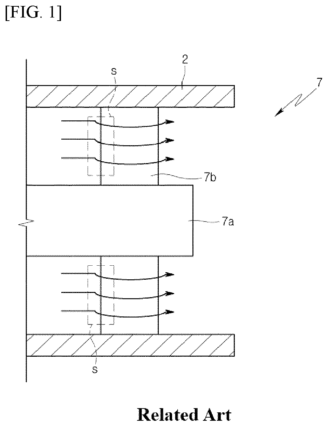

FIG. 1 illustrates one form of a strut 7b disposed on a related art exhaust diffuser 7. Referring to FIG. 1, a diffuser body 7a is disposed to protrude outward from a rear portion of a casing 2 of a gas turbine, and a plurality of struts 7b are disposed to protrude radially along an outer circumference of the diffuser body 7a.

The exhaust gas is discharged to the outside while passing through the plurality of struts 7b, and when the exhaust gas passes through the strut 7b, there occurs a problem in that a separated flow occurs in a leading edge region S of the strut 7b, thereby losing a pressure inside the exhaust diffuser.

## SUMMARY

One or more of the objects of the present technique are achieved by subject-matter of the independent claim(s). Aspects of one or more exemplary embodiments provide a strut structure of an exhaust diffuser, which has struts disposed in a plurality of columns on a strut for an exhaust diffuser of a gas turbine in a flow direction of an exhaust gas, thereby alleviating a separated flow phenomenon of the exhaust gas passing through the strut, and forms several vortices, thereby alleviating a pressure loss.

Additional aspects will be set forth in part in the description which follows and, in part, will become apparent from the description, or may be learned by practice of the exemplary embodiments.

According to an aspect of an exemplary embodiment, there is provided a strut structure with a strip for an exhaust diffuser of a gas turbine including: a plurality of struts disposed along an outer circumference of a diffuser body disposed on a central side of the exhaust diffuser; and one or more strips formed on the strut. An exhaust gas passing through the strut flows along the strip from a leading edge of the strut to alleviate a separated flow phenomenon, and wherein if the exhaust gas enters the strip, corner vortices are formed on the leading edge of the strut, and if the exhaust gas flows along the strip, streamwise vortices may be formed to alleviate a pressure loss of the exhaust gas.

The strip is formed on the strut in parallel to a flow direction of the exhaust gas.

The strip may be a projection type strip protruding outward from the strut.

The projection type strip has a rectangular cross-sectional shape with respect to the flow direction of the exhaust gas, i.e. in a plane perpendicular to the flow direction of the exhaust gas and/or in a plane parallel to the flow direction of the exhaust gas.

If a length from the leading edge of the strut to a trailing edge thereof is designated as c, and a height from a diffuser body connection part of the strut to an outer end thereof is designated as b, a height h of the projection type strip may be formed at a ratio of a range of $0 \leq h/c \leq 0.005$.

A width w of the projection type strip may be formed at a ratio of a range of $0.017 \leq w/c \leq 0.05$.

The projection type strips may be disposed on the strut in a plurality of columns.

A spacing S between neighboring projection type strips among the projection type strips disposed in the plurality of columns may be formed at a ratio of a range of $0.05 \leq s/c \leq 0.27$.

The strut structure with the strip for the exhaust diffuser may further include at least one sub projection disposed in the longitudinal direction of the projection type strip to strengthen the occurrence of the streamwise vortices of the exhaust gas.

The projection type strips may be disposed on the strut in a plurality of columns. The sub projections may be disposed at irregular locations between neighboring strips among the projection type strips.

The projection type strips may be disposed on the strut in a plurality of columns. The sub projections may be disposed to face each other at locations corresponding to each other between neighboring strips among the projection type strips.

The sub projection(s) may have a rounded shape.

A vortex induction block connected to the projection type strip on the leading edge of the strut may be disposed to strengthen the occurrence of the corner vortices of the exhaust gas.

The vortex induction block may include one or more bending portions.

The bending portion may have a rounded step shape.

The strip may be a groove type strip recessed inward from the strut.

The groove type strip has a rectangular cross-sectional shape with respect to the flow direction of the exhaust gas, i.e. in a plane perpendicular to the flow direction of the exhaust gas and/or in a plane parallel to the flow direction of the exhaust gas.

The strut structure with the strip for the exhaust diffuser may further include a sub groove connected to the groove type strip on the strut and disposed in the flow direction of the exhaust gas to strengthen the occurrence of the streamwise vortices of the exhaust gas.

The sub groove may include: a curved portion connected to the groove type strip; and a linear portion connected to the curved portion and disposed in the flow direction of the exhaust gas.

The strut structure with the strip for the exhaust diffuser may further include an expansion cutout portion connected to the groove type strip on the leading edge of the strut and expanding more than a width of the groove type strip to strengthen the occurrence of the corner vortices of the exhaust gas on the leading edge of the strut.

According to an aspect of another exemplary embodiment, there is provided an exhaust diffuser for a gas turbine including a strut structure with the strip according to any one of the herein described embodiments.

According to an aspect of another exemplary embodiment, there is provided a gas turbine including: a compressor section configured to compress air; a combustor configured to mix the compressed air with fuel and to combust the air and fuel mixture; a turbine section configured to produce power with the combustion gas discharged from the combustor; and an exhaust diffuser configured to discharge the combustion gas passing through the turbine section to the outside as an exhaust gas, the exhaust diffuser having a strut structure with the strip according to any one of the herein described embodiments.

The present disclosure may form the strip on the strut for the exhaust diffuser, thereby alleviating the separated flow phenomenon of the exhaust gas on the leading edge of the strut.

Further, when the exhaust gas flows to the strut, the corner vortices are formed on the leading edge of the strut, and the streamwise vortices are formed in the longitudinal direction of the strip, thereby alleviating the pressure loss inside the exhaust diffuser.

This may ultimately improve the efficiency of the gas turbine.

## BRIEF DESCRIPTION OF THE DRAWINGS

The above and other aspects will become more apparent from the following description of the exemplary embodiments with reference to the accompanying drawings, in which:

FIG. 1 is a diagram illustrating a related art strut structure of an exhaust diffuser of a gas turbine;
FIG. 2 is a diagram illustrating a general structure of a gas turbine;
FIG. 3 is a diagram illustrating a structure in which a projection type strip is formed on a strut for an exhaust diffuser according to an exemplary embodiment;
FIG. 4 is a diagram illustrating a structure in which a groove type strip is formed on the strut for the exhaust diffuser according to an exemplary embodiment;
FIG. 5 is a diagram illustrating a length c and height b of the strut, a height h and width w of the strip, and a spacing S between the strips according to an exemplary embodiment;
FIG. 6 is a diagram comparing an occurrence of a separated flow phenomenon and an occurrence of corner vortices and streamwise vortices according to whether the strip is formed on the strut;
FIG. 7 is a diagram illustrating a degree of a lift coefficient according to ratio relationships between s/c, w/c, and h/c;
FIG. 8 is a diagram comparing lift coefficients and drag coefficients according to whether the strip is formed at a specific Reynolds number (Re; unitless);
FIG. 9 is a diagram comparing drag polars according to whether the strip is formed at the specific Reynolds number (Re; unit-less);
FIG. 10 is a diagram illustrating a projection type strip according to another exemplary embodiment;
FIG. 11 is a diagram illustrating a projection type strip according to another exemplary embodiment;
FIG. 12 is a diagram illustrating a projection type strip according to another exemplary embodiment;
FIG. 13 is a diagram illustrating a groove type strip according to another exemplary embodiment; and
FIG. 14 is a diagram illustrating a groove type strip according to another exemplary embodiment.

## DETAILED DESCRIPTION

Various modifications and various embodiments will be described in detail with reference to the accompanying drawings so that those skilled in the art can easily carry out the disclosure. It should be understood, however, that the various embodiments are not for limiting the scope of the disclosure to the specific embodiment, but they should be interpreted to include all modifications, equivalents, and alternatives of the embodiments included within the scope disclosed herein.

Hereinafter, exemplary embodiments will be described in detail with reference to the accompanying drawings. In order to clearly illustrate the disclosure in the drawings, some of the elements that are not essential to the complete understanding of the disclosure may be omitted, and like reference numerals refer to like elements throughout the specification.

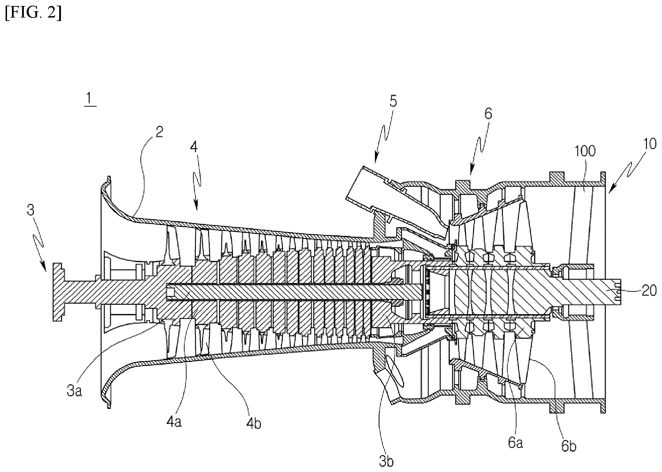

FIG. 2 is a diagram illustrating a general structure of a gas turbine according to an exemplary embodiment.

Referring to FIG. 2, a gas turbine 1 may include a casing 2 forming an appearance, a compressor section 4 configured to compress air, a combustor 5 configured to combust the compressed air, a turbine section 6 configured to generate power using the combustion gas, an exhaust diffuser 10 configured to discharge an exhaust gas, and a rotor 3 connecting the compressor section 4 to the turbine section 6 to transfer a rotational power.

Based on a flow direction of gas (e.g., compressed air or combustion gas), the compressor section 4 is disposed at an upstream side of the gas turbine 1 and the turbine section 6 is disposed at a downstream side of the gas turbine 1. The combustor 5 is disposed between the compressor section 4 and the turbine section 6. Outside air is thermodynamically introduced into the compressor section 4 to go through an adiabatic compression process. The compressed air is introduced into the combustor 5 and mixed with fuel to go through an isobaric combustion process, and the combustion gas is introduced into the turbine section 6 to go through an adiabatic expansion process.

The compressor section 4 includes vanes and rotors. The turbine section 6 includes vanes and rotors. The compressor vanes and rotors are arranged in a multi-stage arrangement along the flow direction of compressed air. The turbine vanes and rotors are arranged in a multi-stage arrangement along the flow direction of combustion gas. The compressor section 4 is designed such that an internal space is gradually decreased in size from a front stage to a rear stage so that air drawn into the compressor section 4 can be compressed. On the contrary, the turbine section 6 is designed such that an internal space is gradually increased in size from a front stage to a rear stage so that combustion gas received from the combustor 5 can expand.

A torque tube 3b configured to transfer the rotational torque generated by the turbine section 6 to the compressor section 4 is provided between the compressor section 4 and the turbine section 6.

Each of the compressor rotors includes a compressor rotor disk 4a and a compressor blade 4b fastened to the compressor rotor disk. The compressor section 4 includes a plurality of compressor rotor disks 4a, and respective compressor rotor disks 4a are coupled to each other by a tie rod 3a to prevent axial separation in an axial direction.

The compressor rotor disks 4a are arranged in the axial direction with the tie rods 3a extending through central portions of the compressor rotor disks 4a. Adjacent compressor rotor disks are arranged such that opposing surfaces thereof are in tight contact with each other by being tightly fastened by the tie rod so that the adjacent compressor rotor disks cannot rotate relative to each other.

A plurality of blades 4b (or referred to as buckets) are radially coupled to an outer circumferential surface of each of the compressor rotor disk 4a. Each of the blades 4b includes a dove tail portion by which the blade 4b is fastened to the compressor rotor disk 4a.

A fastening method of the dove tail portion is classified into a tangential type and an axial type. The fastening method may be selected according to a structure of a gas turbine to be used, and may have dovetail shape or fir-tree shape. In some cases, the compressor blade 4b may be fastened to the compressor rotor disk 4a by using other fastening devices, such as a key or a bolt.

A plurality of vanes (or referred to as nozzles) are fixedly arranged on an inner circumferential surface of the compressor section 4, and rows of the vanes are arranged between rows of the blades 4b. While the compressor rotor disks 4a rotate along with a rotation of the tie rod 3a, the vanes fixed to the casing do not rotate. The vanes guide the flow of compressed air moved from front-stage blades 4b of the compressor rotor disk 4a to rear-stage blades 4b of the compressor rotor disk 4a.

The tie rod 3a is disposed to penetrate center portions of the plurality of compressor rotor disks 4a, and has one end fastened into the compressor rotor disk 4a located at the foremost stage of the compressor section 4, and the other end fixed to the torque tube 3b.

It is understood that the tie rod 3a is not limited to the example illustrated in FIG. 2, and may be changed or vary according to one or more other exemplary embodiments. For example, there are three types of tie rods: a single-type in which one tie rod may penetrate the central portions of the compressor discs; a multi-type in which multiple tie rods may be arranged circumferentially; and a complex type in which the single-type and the multi-type may be combined.

The combustor 5 mixes the introduced compressed air with fuel to produce a high-temperature and high-pressure combustion gas having high energy, and increases the temperature of the combustion gas to a heat-resistant temperature limit at which the combustor and turbine components are able to withstand in an isobaric combustion process.

A plurality of combustors constituting a combustion system of the gas turbine may be arranged within the casing 2 formed in a cell form.

The high-temperature and high-pressure combustion gas supplied from the combustor 5 flows into the turbine section 6 and expands while passing through the inside of the turbine section 6, thereby applying impulse or reaction forces to the rotational vane of the turbine section 6 to generate mechanical energy.

A portion of the mechanical energy is supplied to the compressor section 4 via the torque tube 3b, and a remaining portion is used to drive a generator to produce power.

In the turbine section 6, a plurality of stators and rotors are configured to be alternately disposed and formed within a vehicle compartment, and the rotor is driven by the combustion gas to rotationally drive an output shaft to which the generator is connected.

The turbine section 6 basically is similar to the compressor section 4 in structure. That is, the turbine section 6 includes a plurality of turbine rotors similar to the compressor rotors. Each of the turbine rotors includes a turbine rotor disk 6a and a turbine blade 6b fastened to the turbine rotor disk. The turbine section 6 includes a plurality of turbine rotor disks 6a, and respective turbine rotor disks 6a are coupled to each other.

A plurality of turbine blades 6b (or referred to as buckets) are radially disposed. Each of the turbine blade 6b may also be coupled to the turbine rotor disk 6a in the dove tail method.

A plurality of vanes (or referred to as nozzles) are fixedly arranged on an inner circumferential surface of the turbine section 6, and rows of the vanes are arranged between rows of the blades 6b.

In the gas turbine having the above-described structure, the introduced air is compressed in the compressor section 4, combusted by the combustor 5, then moved to the turbine section 6 to be power-generated and driven, and discharged to the atmosphere through an exhaust diffuser 10.

The exhaust diffuser 10 may have a diffuser body 20 disposed therein, the diffuser body 20 with a cylindrical shape protruding outward from an inner central side of the exhaust diffuser, and a plurality of struts 100 may be radially disposed on an outer circumference of the diffuser body 20.

Here, the torque tube 3b, the compressor rotor disk 4a, the compressor blade 4b, the turbine rotor disk 6a, the turbine blade 6b, and the tie rod 3a, which are rotation components may be collectively referred to as the rotor 3 or a rotating body. Further, the casing 2 and the vane which are non-rotation components may be collectively referred to as the stator or a fixing body.

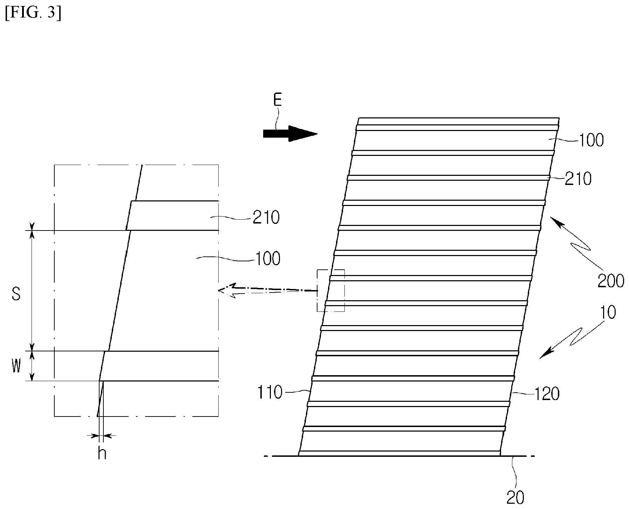

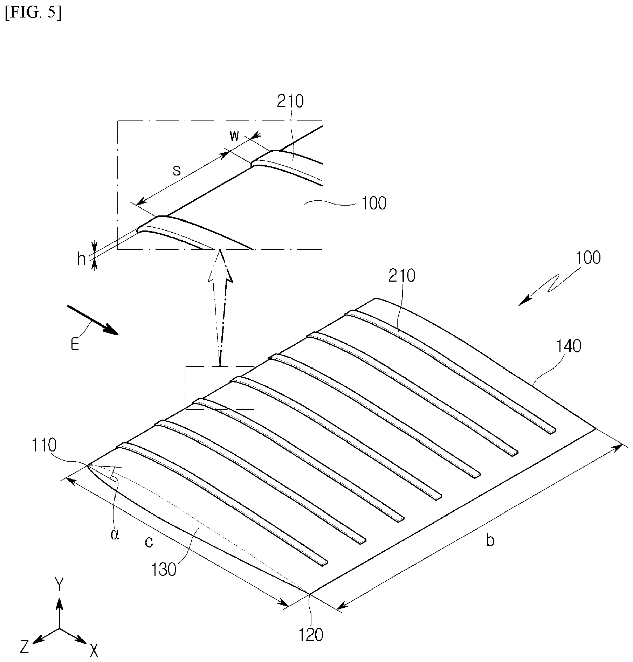

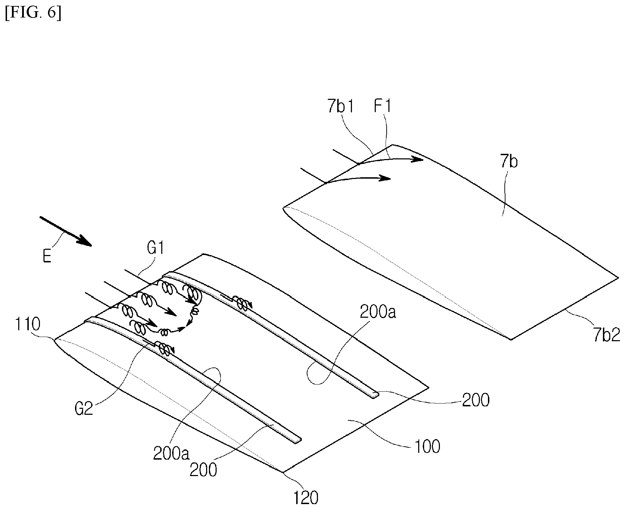

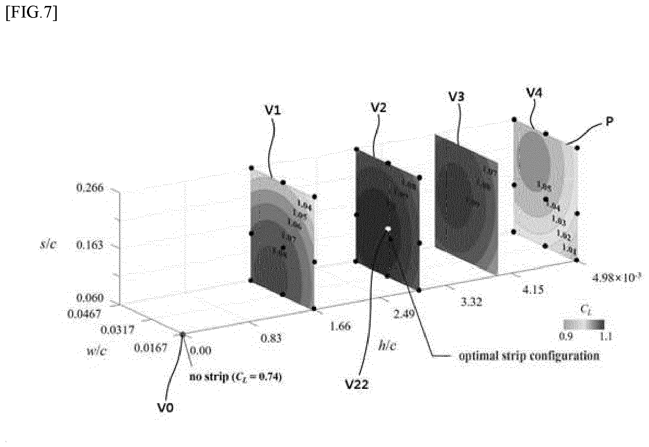

FIG. 3 is a diagram illustrating a structure in which a projection type strip 210 is formed on the strut 100 for the exhaust diffuser 10 according to an exemplary embodiment, and FIG. 5 is a diagram illustrating a length c and a height b of the strut 100, a height h and a width w of a strip 200, and a spacing S between the strips 200. FIG. 6 is a diagram comparing an occurrence of a separated flow F 1 phenomenon and an occurrence of corner vortices G1 and streamwise vortices G2 according to whether the strip 200 is formed on the strut 100, FIG. 7 is a diagram illustrating the degree of a lift coefficient according to the ratio relationships between s/c, w/c, and h/c.

Referring to FIG. 3, the structure of the strut 100 with the strip 200 for the exhaust diffuser according to an exemplary embodiment may include the plurality of struts 100 disposed along the outer circumference of the diffuser body 20 disposed on the central side of the exhaust diffuser 10 of the gas turbine and one or more strips 200 formed on the strut 100. For example, the strip 200 may be disposed on the strut 100 in a plurality of columns.

Further, the strip 200 may be formed on the strut 100 in parallel to the flow direction of an exhaust gas E, and the strip 200 may be in a form of a projection type strip 210 protruding outward from the strut 100.

The projection type strip 210 has a rectangular cross-sectional shape with respect to the flow direction of the exhaust gas E.

Referring to FIG. 6, in a case in which the strip 200 is not formed, when the exhaust gas E flows in the strut 7b having a leading edge 7b 1 and a trailing edge 7b2 and reaches the leading edge 7b 1 of the strut 7b, a separated flow F1 phenomenon may occur when the exhaust gas E flows along a curved surface of the strut 7b. Therefore, a pressure inside the exhaust diffuser 10 is reduced, such that a pressure loss may occur.

On the contrary, when the exhaust gas E flows in the strut 100 formed with the strip 200 and reaches the leading edge 110 of the strut 100, the separated flow F1 is suppressed and alleviated by the strip 200.

That is, when entering the leading edge 110 of the strut 100, the exhaust gas E flows between neighboring strips 200, such that corner vortices G1 occur. Due to the occurrence of the corner vortices G1, the exhaust gas E shows an attached flow around the leading edge 110, and the separated flow F1 phenomenon is suppressed.

In addition, when the exhaust gas E flows between the strips 200, a flow resistance due to a friction on a boundary surface 200a with the strip 200 is generated, such that streamwise vortices G2 occur. Further, when the streamwise vortices G2 are formed, the exhaust gas E shows the attached flow and the separated flow F1 phenomenon is suppressed.

Due to the placement of the strip 200, the separated flow F1 phenomenon on the strut 100 is suppressed and alleviated, and this may be confirmed through experimental result values illustrated in FIGS. 5 and 7.

Referring to FIG. 5 which illustrates an experimental design criterion of the projection type strip 210, a length from the leading edge 110 of the strut 100 to the trailing edge 120 thereof may be designated as c, and a height from a diffuser body connection part 130 of the strut 100 to an outer end 140 thereof may be designated as b.

Further, a height of the projection type strip 210 may be designated as h, a width thereof may be designated as w, and a spacing between the neighboring projection type strips 210 may be designated as S.

Here, parameters designated based on the experimental results may have the following relationships.

(1) The height h of the projection type strip 210 may be designed at a ratio of a range of $0 \leq h/c \leq 0.005$.
(2) The width w of the projection type strip 210 may be designed at a ratio of a range of $0.017 \leq w/c \leq 0.05$.
(3) The spacing S between the neighboring projection type strips 210 among the projection type strips 210 disposed in the plurality of columns may be designed at a ratio of a range of $0.05 \leq s/c \leq 0.27$.

The aforementioned range values for the height h and width w of the projection type strip 210, and the spacing S between the neighboring projection type strips 210 may be optimal range values derived through the experiment.

Referring to FIG. 7, if the strip 200 was not formed on the strut 100 ($V_0$), a lift coefficient $C_L$ was measured as 0.74. Further, the projection type strip 210 was configured by various design values, and the experiment for the value of the lift coefficient $C_L$ was conducted.

As illustrated in FIG. 7, it may be confirmed that among the experimental design values, the lift coefficient $C_L$ generally maintains a value of 1 or more in four regions $V_1$, $V_2$, $V_3$, $V_4$ indicated on the h/c, w/c, and s/c axes. Here, the maximum lift coefficient $C_L$ was derived up to 1.1 in the region $V_2$.

The optimal design range values in the experimental results were derived by cases in which the height h of the projection type strip 210 was designed at the ratio of the range of $0 \leq h/c \leq 0.005$, the width w of the projection type strip 210 was designed at the ratio of the range of $0.017 \leq w/c \leq 0.05$, and the spacing S between the neighboring projection type strips 210 among the projection type strips 210 disposed in the plurality of columns was designed at the ratio of the range of $0.05 \leq s/c \leq 0.27$.

Each of the values of the h/c, the w/c, and the s/c of the projection type strip 210 at a design value $V_{22}$ at which the maximum lift coefficient $C_L$ was derived up to 1.1 is as follows.

$$(h/c,\ w/c,\ s/c) = (0.003,\ 0.03,\ 0.15)$$

That is, in the case of having the values of h/c = 0.003, w/c = 0.03, and s/c = 0.15, the maximum lift coefficient $C_L$ was generated, such that optimal ratios of the h/c, the w/c, and the s/c are when being designed as h/c = 0.003, w/c = 0.03, and s/c = 0.15.

A reliability of the optimization result is 99.6%. The experiment in each of the regions $V_1$, $V_2$, $V_3$, $V_4$ was conducted by values at a plurality of points P. The experimental result values show the high reliability, such that if the aforementioned design ratios of the h/c, the w/c, and the s/c are applied, it is possible to prevent the lift coefficient $C_L$ from being reduced by the separated flow F1 on the strut 100.

In FIG. 6, the case in which the separated flow F1 phenomenon is suppressed and alleviated may mean an improvement in the value of the lift coefficient $C_L$ in FIG. 7. That is, as the strip 200 is formed on the strut 100, the separated flow F1 phenomenon is suppressed and alleviated, and as a result, the value of the lift coefficient $C_L$ is improved.

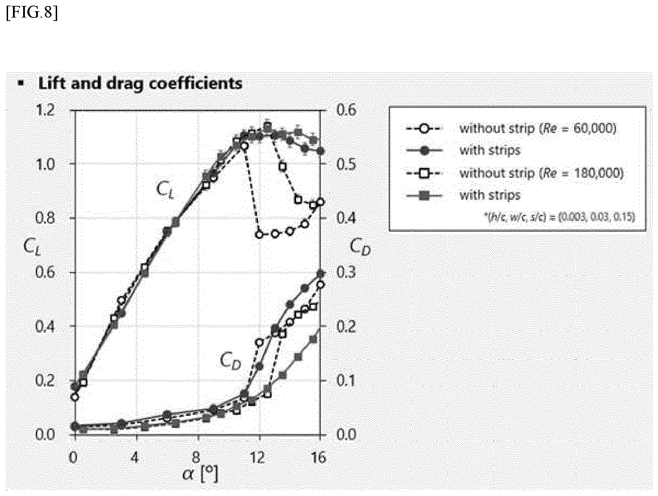

FIG. 8 illustrates an experimental chart comparing the lift coefficients $C_L$ and drag coefficients $C_D$ according to whether the strip 200 is formed at a specific Reynolds number (Re; unit-less).

Referring to FIG. 8, an angle $\alpha$ in the experiment chart may be an entry angle at which the exhaust gas enters the leading edge 110 of the strut 100. The exhaust gas discharged from the turbine section of the gas turbine is discharged to the exhaust diffuser after passing through the rotating turbine blade, such that when the exhaust gas enters the strut 100, a predetermined entry angle is formed with respect to the leading edge 110 of the strut 100.

Here, Re of the experimental chart means a Reynolds number and is a unit-less.

The experimental chart illustrated in FIG. 8 shows that as the value of the entry angle $\alpha$ of the exhaust gas with respect to the leading edge 110 of the strut 100 is increased, the lift coefficient $C_L$ and the drag coefficient $C_D$ generally tends to be increased.

However, if the entry angle $\alpha$ of the exhaust gas exceeds 11° to 12°, it may be confirmed that in the case of the lift coefficient $C_L$, the value of the lift coefficient $C_L$ is rapidly reduced if the strip 200 is not formed. This may mean that the separated flow F1 phenomenon severely occurs.

On the contrary, if the strip 200 is formed, it may be confirmed that the degree at which the value of the lift coefficient $C_L$ is reduced is smooth compared to the case in which the strip 200 is not formed.

That is, as illustrated in FIG. 6, in the case in which the strip 200 is formed, the separated flow F1 phenomenon is suppressed and alleviated, and the corner vortices G1 and the streamwise vortices G2 occur, such that the value of the lift coefficient $C_L$ is not rapidly reduced, smoothly reduced, and maintained, compared to the case in which the strip 200 is not formed.

As the experimental results, it may be confirmed that the case in which the strip 200 is formed has a better characteristic of the lift coefficient $C_L$ than that of the case in which the strip 200 is not formed.

Next, as the value of the entry angle $\alpha$ of the exhaust gas with respect to the leading edge 110 of the strut 100 is increased, the drag coefficient $C_D$ generally tends to be increased.

However, if the entry angle $\alpha$ of the exhaust gas exceeds 11° to 12°, it may be confirmed that the value of the drag coefficient $C_D$ is rapidly increased in the case in which the strip 200 is not formed. This means that the flow resistance is largely generated on the leading edge 110 of the strut 100 according to the increase in the entry angle $\alpha$.

Further, it may be confirmed that the value of the drag coefficient $C_D$ is generally increased even in the case in which the strip 200 is formed.

The strip 200 in a condition in which the Reynolds number (Re) is 60000 shows relatively large increase in the drag coefficient $C_D$. This is not largely different from that of the case in which the strip 200 is not formed.

On the other hand, the strip 200 in a condition in which the Reynolds number (Re) is 180000 shows a tendency of relatively smooth increase compared to the strip 200 in the condition in which the Reynolds number (Re) is 60000. Further, the case in which the strip 200 is not formed also shows a tendency of smooth increase compared to the increase tendency measured in the cases in which respective Reynolds numbers (Re) are 60000 and 180000.

It may be confirmed that in the case in which the strip 200 is formed on the strut 100, as the Reynolds number (Re) is increased, the drag coefficient $C_D$ may be smoothly increased, thereby alleviating the flow resistance.

As the experimental results, it may be confirmed that as the Reynolds number (Re) has a lager value, the case in which the strip 200 is formed has a better drag coefficient $C_D$ characteristic than that of the case in which the strip 200 is not formed.

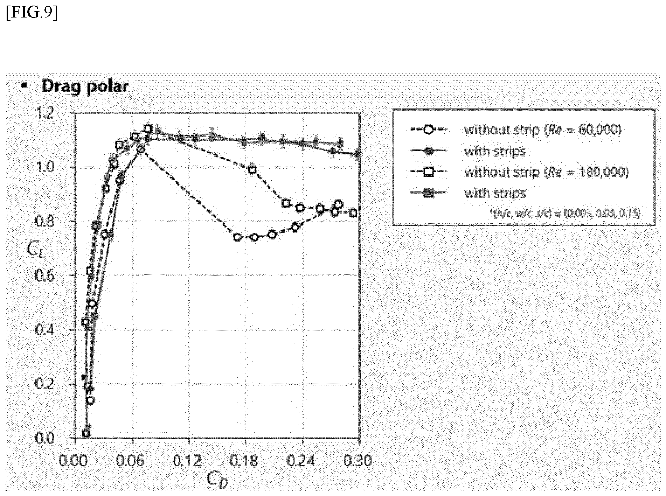

FIG. 9 illustrates an experimental chart comparing drag polars according to whether the strip 200 is formed at the specific Reynolds number (Re; unit-less).

Referring to FIG. 9, a horizontal axis of the drag polar indicates the drag coefficient $C_D$, and a vertical axis thereof indicates the lift coefficient $C_L$.

As illustrated in FIG. 9, it may be confirmed that in the case in which the strip 200 is not formed, as the value of the drag coefficient $C_D$ is increased, the value of the lift coefficient $C_L$ is rapidly increased in the beginning, and then the value of the lift coefficient $C_L$ is reduced from a time point when the value of the drag coefficient $C_D$ is 0.06 to 0.08.

This may mean that the separated flow F1 phenomenon remarkably occurs and thus the value of the lift coefficient $C_L$ is reduced, if the leading edge 110 of the strut 100 suffers severe flow resistance in proportion to the drag coefficient $C_D$.

On the contrary, it may be confirmed that in the case in which the strip 200 is formed, if the value of the drag coefficient $C_D$ is increased in the beginning, the value of the lift coefficient $C_L$ is also increased rapidly together, and then even if the value of the drag coefficient $C_D$ is increased to 0.06 or more, the value of the lift coefficient $C_L$ is not reduced and maintains relatively constant value.

This may mean that even if the flow resistance is generated in proportion to the drag coefficient $C_D$ on the leading edge 110 of the strut 100, the attached flow occurs due to the formation of the corner vortices G1 and the streamwise vortices G2, such that the value of the lift coefficient $C_L$ is maintained, thereby alleviating the separated flow F1 phenomenon.

That is, it may be confirmed that based on the experimental results, the case in which the strip 200 is formed prevents the value of the lift coefficient $C_L$ from being remarkably reduced compared to the case in which the strip 200 is not formed.

Further, the drag polar illustrated in FIG. 9 shows a characteristic in which when the strip 200 is formed regardless of the Reynolds number (Re), the value of the lift coefficient $C_L$ remains relatively constant even if the drag coefficient $C_D$ increases.

As a result, when the strip 200 is formed on the strut 100, the value of the lift coefficient $C_L$ remains stable compared to the case in which the strip 200 is not formed on the strut 100, which means that the separated flow F1 phenomenon is suppressed and alleviated on the leading edge 110 of the strut 100, thereby alleviating the pressure loss in the exhaust diffuser 10.

Here, the optimal design range values for deriving the results are as follows.

$$0 \leq h/c \leq 0.005$$
$$0.017 \leq w/c \leq 0.05$$
$$0.05 \leq s/c \leq 0.27$$

Further, the optimal values for generating the value of the maximum lift coefficient $C_L$ are as follows.

$$h/c = 0.003$$
$$w/c = 0.03$$
$$s/c = 0.15$$

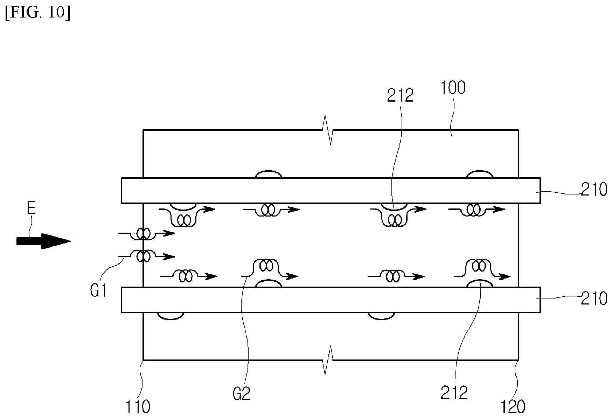

FIGS. 10, 11, and 12 illustrate the projection type strip 210 according to another exemplary embodiments.

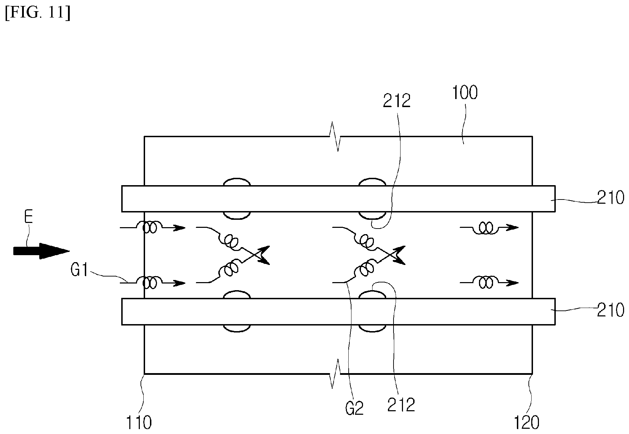

Referring to FIGS. 10 and 11, the projection type strip 210 according to exemplary embodiments may further include a sub projection 212 disposed in a longitudinal direction of the projection type strip 210 in order to strengthen the occurrence of the streamwise vortices G2 of the exhaust gas E.

In FIG. 10, the sub projections 212 may be disposed at irregular locations between the neighboring strips 200 among the projection type strips 210.

In this case, when the exhaust gas E enters the leading edge 110 of the strut 100, the corner vortices G1 occur on the leading edge 110, and when the exhaust gas E moves in the longitudinal direction of the strip 200, the streamwise vortices G2 occur.

Further, when the exhaust gas E passes through a plurality of sub projections 212 disposed to be spaced apart from each other by a predetermined spacing in the longitudinal direction of the strip 200, that is, the flow direction of the exhaust gas E, the flow direction is changed by the shape of the sub projection 212, such that additional vortices occur on the entry surface of the sub projection 212.

The additional vortices may occur due to the placement of the sub projection 212, thereby additionally alleviating the pressure loss.

In FIG. 11, the sub projections 212 may be disposed to face each other at locations corresponding to each other between the neighboring strips 200 among the projection type strips 210.

In this case, when the exhaust gas E enters the leading edge 110 of the strut 100, the corner vortices G1 occur on the leading edge 110, and when the exhaust gas E moves in the longitudinal direction of the strip 200, the streamwise vortices G2 occur.

Further, when the exhaust gas E passes through a plurality of sub projections 212 disposed to be spaced apart from each other by a predetermined spacing in the longitudinal direction of the strip 200, that is, the flow direction of the exhaust gas E, the flow direction is changed by the shape of the sub projection 212, such that additional vortices occur on the entry surface of the sub projection 212.

Further, due to the additional vortices, the exhaust gas E may be mixed by a pair of sub projections 212 disposed at the locations corresponding to each other on the neighboring strips 200. This may occur when the spacing between the neighboring strips 200 is sufficiently small. The pressure loss may be additionally alleviated by the mix between the vortices.

The sub projection 212 according to exemplary embodiments may be implemented in a rounded shape. This is because when entering the sub projection 212, the exhaust gas E suffers relatively little flow resistance, thereby smoothly inducing occurrence of the vortices.

FIGS. 10 and 11 show that the sub projection 212 is rounded shape, but is not limited thereto, and other shapes capable of inducing the same effect may be considered according to the design specification.

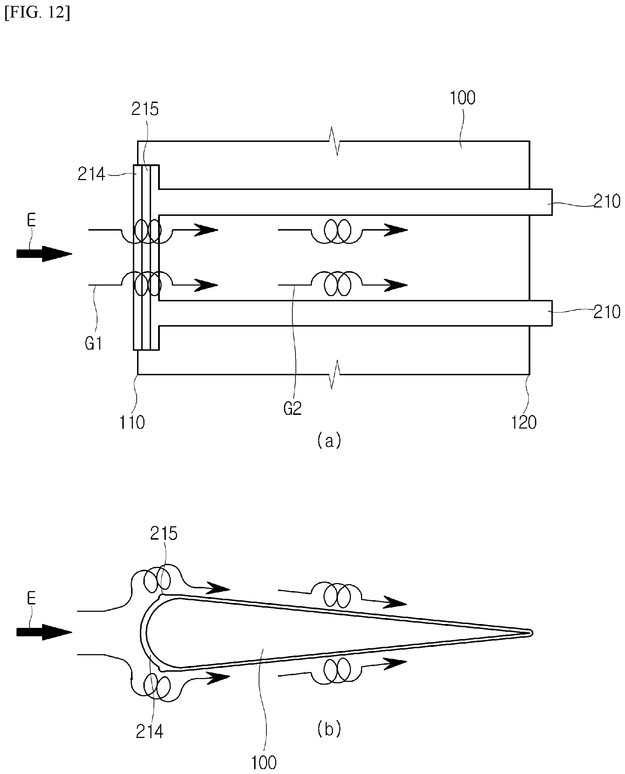

Referring to FIG. 12, a vortex induction block 214 connected to the projection type strip 210 may be disposed on the leading edge 110 of the strut 100 in order to strengthen the occurrence of the corner vortices G1 of the exhaust gas E. Further, one or more bending portions 215 may be formed on the vortex induction block 214.

In this case, when entering the leading edge 110 of the strut 100, the exhaust gas E flows along the bending shape in the bending portion 215 of the vortex induction block 214 and forms additional corner vortices G1. That is, the corner vortices G1 are further strengthened on the leading edge 110, and this may further alleviate the pressure loss inside the exhaust diffuser 10 together with the streamwise vortices G2.

Here, the bending portion 215 may have a rounded step shape, though it is understood that other embodiments are not limited thereto and other shapes capable of inducing the same effect may be considered according to the design specifications.

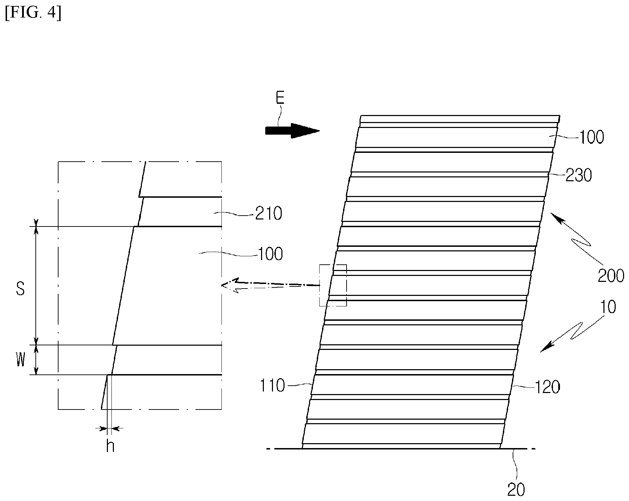

FIG. 4 is a diagram illustrating a structure in which a groove type strip 230 is formed on the strut 100 for the exhaust diffuser 10 according to an exemplary embodiment,

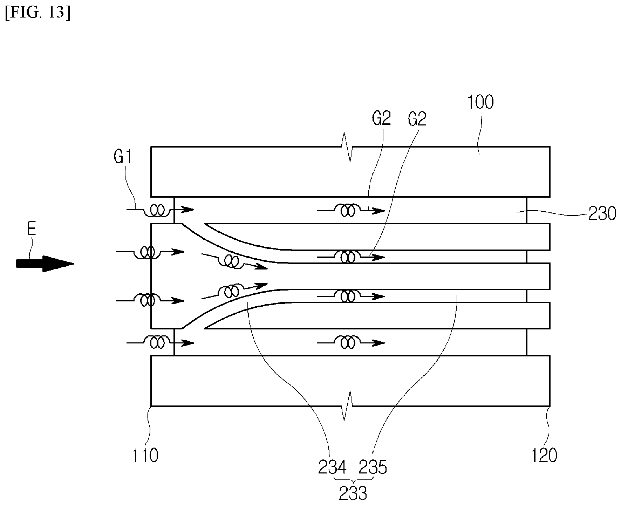

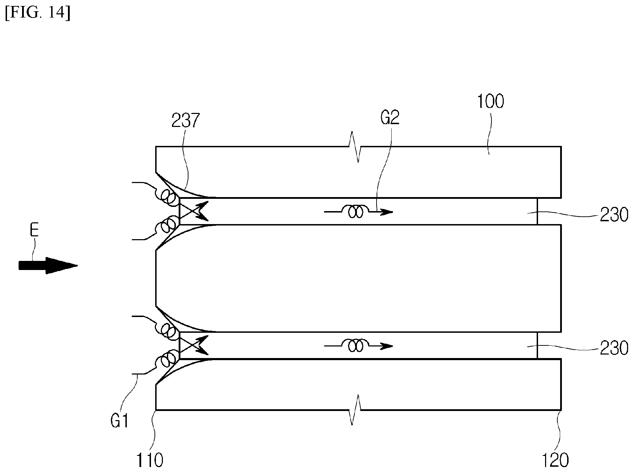

FIG. 13 is a diagram illustrating the groove type strip 230 according to another exemplary embodiment, and FIG. 14 is a diagram illustrating the groove type strip 230 according to another exemplary embodiment.

Referring to FIG. 4, the structure of the strut 100 with the strip 200 for the exhaust diffuser 10 according to an exemplary embodiment may be configured to include a plurality of struts 100 disposed along an outer circumference of a diffuser body 20 disposed on a central side of the exhaust diffuser 10 of the gas turbine and one or more strips 200 formed on the strut 100. The strips 200 may be disposed on the strut 100 in a plurality of columns.

The strip 200 may be formed on the strut 100 in parallel to the flow direction of the exhaust gas E, and the strip 200 may be an exemplary embodiment of a groove type strip 230 recessed inward from the strut 100.

The groove type strip 230 has a rectangular cross-sectional shape with respect to the flow direction of the exhaust gas E.

FIG. 6 illustrates a comparison of the occurrence of the separated flow F1 phenomenon and the occurrence of the corner vortices G1 and the streamwise vortices G2 according to whether the strip 200 is formed on the strut 100. It is understood that FIG. 6 is expressed by the projection type strip 210, but similar operations for the corner vortices G1 and the streamwise vortices G2 may also be expected and derived from the groove type strip 230.

Referring back to FIG. 4, the design criterion of the groove type strip 230 is suggested. A height and a width of the groove type strip 230 may be designated as h and w, respectively, and a spacing between neighboring projection type strips 210 may be designated as S.

In this case, as illustrated in FIG. 5, a length from the leading edge 110 of the strut 100 to the trailing edge 120 thereof may be designated as c, and a height from the diffuser body connection part 130 of the strut 100 to the outer end 140 thereof may be designated as b.

Here, parameters designated based on the experimental results illustrated in FIG. 7 may be designed by the following relationships.

It is understood that FIG. 7 is the experiment about the projection type strip 210, but in terms of deriving the similar effect, the similar criterion for the range value of the projection type strip 210 may also be applied to the range value of the groove type strip 230. However, it may be determined as other range values based on the experimental results.

The height h of the groove type strip 230 may be designed at a ratio of a range of $0 \leq h/c \leq 0.005$.

The width w of the groove type strip 230 may be designed at a ratio of a range of $0.017 \leq w/c \leq 0.05$.

The spacing S between the neighboring groove type strips 230 among the groove type strips 230 disposed in the plurality of columns may be designed at a ratio of a range of $0.05 \leq s/c \leq 0.27$.

As the aforementioned range values for the height h and width w of the groove type strip 230, and the spacing S between the neighboring groove type strips 230, similar optimal range values will be able to be adopted based on the experimental result values of the projection type strip 210.

Here, the contents for the lift coefficient $C_L$, the drag coefficient $C_D$, and the drag polar illustrated in FIGS. 7 and 9 refer to the aforementioned contents.

As a result, the ratio values of h/c = 0.003, w/c = 0.03, and s/c = 0.15 may be adopted and designed as optimal values even in the case of the groove type strip 230 with reference to the experimental results of the projection type strip 210. However, the optimal values may be changed according to final experimental results.

Meanwhile, referring to FIG. 13, the groove type strip 230 according to another exemplary embodiment may further include a sub groove 233 connected to the groove type strip 230 on the strut 100 and disposed in the flow direction of the exhaust gas E in order to strengthen the occurrence of the streamwise vortices G2 of the exhaust gas E.

The sub groove 233 may be configured to include a curved portion 234 connected to the groove type strip 230 and a linear portion 235 connected to the curved portion 234 and disposed in the flow direction of the exhaust gas E.

If the exhaust gas E flowing to the strut 100 enters the groove type strip 230, the corner vortices G1 occur, and while flowing along the inside of the groove type strip 230, the streamwise vortices G2 occur due to the friction with the boundary surface of the strip 200.

Further, a part of the exhaust gas E flowing along the inside of the groove type strip 230 may bypass and flow to the curved portion 234 of the sub groove 233, and then flow along the linear portion 235. The streamwise vortices G2 occur due to the friction with the boundary surface between the curved portion 234 and the linear portion 235.

If the exhaust gas E flowing between the neighboring groove type strips 230 passes through the sub groove 233, the streamwise vortices G2 occur due to a height step with the sub groove 233.

That is, as the sub groove 233 is formed, the exhaust gas E passing through the strut 100 causes an effect of generally strengthening the streamwise vortices G2, thereby alleviating the pressure loss inside the exhaust diffuser 10.

Referring to FIG. 14, the groove type strip 230 according to another exemplary embodiment may be configured to include an expansion cutout portion 237 that is connected to the groove type strip 230 on the leading edge 110 of the strut 100, and extends more than a width of the groove type strip 230 to strengthen the occurrence of the corner vortices G1 of the exhaust gas E on the leading edge 110 of the strut 100.

In this case, the exhaust gas E entering the strut 100 is mixed while flowing toward the groove type strip 230 along the expansion cutout portion 237 on the leading edge 110 of the strut 100.

Here, the corner vortices G1 are strengthened by the mix between the corner vortices G1 on the leading edge 110 itself and the exhaust gas E collected by the change in the flow direction.

This alleviates the pressure loss inside the exhaust diffuser 10. Thereafter, the exhaust gas E flowing along the inside of the groove type strip 230 forms the streamwise vortices G2 due to the friction with the boundary surface of the groove type strip 230.

As described above, according to various exemplary embodiments of the strut structure with the strip for the exhaust diffuser, it is possible to generate the corner vortices G1 and the streamwise vortices G2 on the strut 100 and alleviate the separated flow F1 phenomenon, thereby alleviating the pressure loss inside the exhaust diffuser 10.

**Claims**

1. A strut structure with a strip (200, 210, 230) for an exhaust diffuser (10) of a gas turbine (1) comprising:

   a plurality of struts (100) disposed along an outer circumference of a diffuser body (20) disposed on a central side of the exhaust diffuser (10); and one or more strips (200, 210, 230) formed on the strut (100),

   characterized int that:

   the strip (200, 210, 230) is a projection type strip (210) protruding outward from the strut (100) or a groove type strip (230) recessed inward from the strut (100); and
   the strip (200, 210, 230) is formed on the strut (100) in parallel to a flow direction of the exhaust gas (E) and the strip (200, 210, 230) has a rectangular cross-sectional shape in a plane perpendicular to the flow direction of the exhaust gas (E) such that an exhaust gas (E) passing through the strut (100) flows along the strip (200, 210, 230) from a leading edge (110) of the strut (100) to alleviate a separated flow phenomenon.

2. The strut structure with the strip (200, 210, 230) for the exhaust diffuser (10) of claim 1,

   wherein when the strip (200, 210, 230) is the projection type strip (210), the exhaust gas (E) enters the leading edge (110) of the strut (100) and flows between neighboring strips (200, 210, 230) forming corner vortices (G1) on the leading edge (110) of the strut (100), and when the exhaust gas (E) flows along the strip (200, 210, 230), a flow resistance due to a friction on a boundary surface (200a) of the strip (200) is generated forming streamwise vortices (G2) to alleviate a pressure loss of the exhaust gas (E); or
   wherein when the strip (200, 210, 230) is the groove type strip (230) the exhaust gas (E) flowing to the strut (100) enters the groove type strip (230) forming corner vortices (G1), and while flowing along the inside of the groove type strip (230) the streamwise vortices (G2) occur due to the friction with a boundary surface of the groove type strip (230).

3. The strut structure with the strip (200, 210, 230) for the exhaust diffuser (10) according to any one of the preceding claims,

   wherein if a length from the leading edge (110) of the strut (100) to a trailing edge (120) thereof is designated as c,
   a height h of the strip (200, 210, 230) is formed at a ratio of a range of $0 \le h/c \le 0.005$.

4. The strut structure with the strip (200, 210, 230) for the exhaust diffuser (10) of claim 3,
   wherein a width w of the strip (200, 210, 230) is formed at a ratio of a range of $0.017 \le w/c \le 0.05$.

5. The strut structure with the strip (200, 210, 230) for the exhaust diffuser (10) of claim 3 or 4,

   wherein the strips (200, 210, 230) are disposed on the strut (100) in a plurality of columns, and wherein a spacing s between neighboring strips (200, 210, 230) among the strips (200, 210, 230) disposed in the plurality of columns is formed at a ratio of a range of $0.05 \le s/c \le 0.27$.

6. The strut structure with the strip (200, 210) for the exhaust diffuser (10) according to any one of the preceding, wherein the strip (200, 210, 230) is the projection type strip (210), further comprising:
   sub projections (212) disposed spaced apart in a longitudinal direction of the projection type strip (210) to strengthen the occurrence of the streamwise vortices (G2) of the exhaust gas (E).

7. The strut structure with the strip (200, 210) for the exhaust diffuser (10) of claim 6, wherein the projection type strips (210) are disposed on the strut (100) in a plurality of columns, and

wherein the sub projections (212) are disposed to face each other at locations corresponding to each other between neighboring strips (210) among the projection type strips (210) and/or the sub projections (212) are disposed at irregular locations between neighboring strips (210) among the projection type strips (210).

8. The strut structure with the strip (200, 210) for the exhaust diffuser (10) according to any one of the preceding claims, wherein the strip (200, 210, 230) is the projection type strip (210),

wherein a vortex induction block (214) connected to the projection type strip (210) on the leading edge (110) of the strut (100) is disposed to strengthen the occurrence of the corner vortices (G1) of the exhaust gas (E),

wherein the vortex induction block comprises one or more bending portions (215).

9. The strut structure with the strip (200, 230) for the exhaust diffuser (10) of any one of the preceding claims 1 to 5, wherein the strip (200, 210, 230) is the groove type strip (230), further comprising:

a sub groove (233) connected to the groove type strip (230) on the strut (100) and disposed in the flow direction of the exhaust gas (E) to strengthen the occurrence of the streamwise vortices (G2) of the exhaust gas (E).

wherein the sub groove comprises:

a curved portion (234) connected to the groove type strip (230); and

a linear portion (235) connected to the curved portion (234) and disposed in the flow direction of the exhaust gas (E).

10. The strut structure with the strip (200, 230) for the exhaust diffuser (10) of any one of the preceding claims 1 to 5 or claim 9, wherein the strip (200, 210, 230) is the groove type strip (230), further comprising:

an expansion cutout portion (237) connected to the groove type strip (230) on the leading edge (110) of the strut (100) and expanding more than a width of the groove type strip (2230) to strengthen the occurrence of the corner vortices (G1) of the exhaust gas (E) on the leading edge (110) of the strut (100).

11. A gas turbine (1) comprising:

a compressor section (4) configured to compress air;

a combustor (5) configured to mix the compressed air with fuel and to combust the air and fuel mixture;

a turbine section (6) configured to produce power with the combustion gas discharged from the combustor (5); and

an exhaust diffuser (10) configured to discharge the combustion gas passing through the turbine section (6) to the outside as an exhaust gas (E), the exhaust diffuser (10) having a strut structure according to any one of the preceding claims.

**Patentansprüche**

1. Strebenstruktur mit einer Leiste (200, 210, 230) für einen Abgasdiffusor (10) einer Gasturbine (1), die Folgendes umfasst:

mehrere Streben (100), die entlang eines Außenumfangs eines Diffusorkörpers (20) angeordnet sind, der auf einer zentralen Seite des Abgasdiffusors (10) angeordnet ist; und eine oder mehrere Leisten (200, 210, 230), die auf der Strebe (100) gebildet sind, **dadurch gekennzeichnet, dass** die Leiste (200, 210, 230) eine vorstehende Leiste (210) ist, die von der Strebe (100) nach außen vorsteht, oder eine nutförmige Leiste (230) ist, die von der Strebe (100) nach innen zurückgesetzt ist; und die Leiste (200, 210, 230) auf der Strebe (100) parallel zu einer Strömungsrichtung des Abgases (E) gebildet ist und die Leiste (200, 210, 230) in einer Ebene senkrecht zu der Strömungsrichtung des Abgases (E) eine rechteckige Querschnittsform aufweist, so dass ein Abgas (E), das durch die Strebe (100) verläuft, von einer Vorderkante (110) der Strebe (100) entlang der Leiste (200, 210, 230) strömt, um das Phänomen der getrennten Strömung zu vermindern.

2. Strebenstruktur mit der Leiste (200, 210, 230) für den Abgasdiffusor (10) nach Anspruch 1,

wobei dann, wenn die Leiste (200, 210, 230) die vorstehende Leiste (210) ist, das Abgas (E) in die Vorderkante (110) der Strebe (100) eintritt und zwischen benachbarten Leisten (200, 210, 230) strömt, wobei es an der Vorderkante (110) der Strebe (100) Eckenwirbel (G1) bildet, und dann, wenn das Abgas (E) entlang der Leiste (200, 210, 230) strömt, aufgrund einer Reibung an einer Grenzfläche (200a) der Leiste (200) ein Strömungswiderstand erzeugt wird, der Längswirbel (G2) bildet, um einen Druckverlust des Abgases (E) zu vermindern; oder wobei dann, wenn die Leiste (200, 210, 230) die nutförmige Leiste (230) ist, das Abgas (E), das zu der Strebe (100) strömt, in die nutförmige Leiste (230) eintritt, wobei es Eckenwirbel (G1) bildet, und während es entlang der Innenseite der nutförmigen Leiste (230) strömt, aufgrund der Reibung mit einer Grenzfläche der nutförmigen Leiste (230) die Längswirbel (G2) auftreten.

3. Strebenstruktur mit der Leiste (200, 210, 230) für den Abgasdiffusor (10) nach einem der vorhergehenden Ansprüche,

   wobei dann, wenn eine Länge von der Vorderkante (110) der Strebe (100) zu ihrer Hinterkante (120) mit c bezeichnet wird, eine Höhe h der Leiste (200, 210, 230) in einem Verhältnis in einem Bereich von $0 \leq h/c \leq 0,005$ gebildet ist.

4. Strebenstruktur mit der Leiste (200, 210, 230) für den Abgasdiffusor (10) nach Anspruch 3, wobei eine Breite w der Leiste (200, 210, 230) in einem Verhältnis in einem Bereich von $0,017 \leq w/c \leq 0,05$ gebildet ist.

5. Strebenstruktur mit der Leiste (200, 210, 230) für den Abgasdiffusor (10) nach Anspruch 3 oder 4,

   wobei die Leisten (200, 210, 230) in mehreren Spalten auf der Strebe (100) angeordnet sind, und wobei ein Abstand s zwischen benachbarten Leisten (200, 210, 230) unter den Leisten (200, 210, 230), die in den mehreren Spalten angeordnet sind, in einem Verhältnis in einem Bereich von $0,05 \leq s/c \leq 0,27$ gebildet ist.

6. Strebenstruktur mit der Leiste (200, 210) für den Abgasdiffusor (10) nach einem der vorhergehenden Ansprüche, wobei die Leiste (200, 210, 230) die vorstehende Leiste (210) ist, die ferner Folgendes umfasst:
   Untervorsprünge (212), die in eine Längsrichtung der vorstehenden Leiste (210) voneinander beabstandet angeordnet sind, um das Auftreten der Längswirbel (G2) des Abgases (E) zu verstärken.

7. Strebenstruktur mit der Leiste (200, 210) für den Abgasdiffusor (10) nach Anspruch 6, wobei die vorstehenden Leisten (210) in mehreren Spalten auf der Strebe (100) angeordnet sind, und wobei die Untervorsprünge (212) derart angeordnet sind, dass sie einander an Orten, die einander zwischen benachbarten Leisten (210) unter den vorstehenden Leisten (210) entsprechen, gegenüberliegen und/oder die Untervorsprünge (212) an unregelmäßigen Orten zwischen benachbarten Leisten (210) unter den vorstehenden Leisten (210) angeordnet sind.

8. Strebenstruktur mit der Leiste (200, 210) für den Abgasdiffusor (10) nach einem der vorhergehenden Ansprüche, wobei die Leiste (200, 210, 230) die vorstehende Leiste (210) ist,

   wobei ein Wirbelinduktionsblock (214), der mit der vorstehenden Leiste (210) an der Vorderkante (110) der Strebe (100) verbunden ist, angeordnet ist, um das Auftreten der Eckenwirbel (G1) des Abgases (E) zu verstärken, wobei der Wirbelinduktionsblock einen oder mehrere Biegeabschnitte (215) umfasst.

9. Strebenstruktur mit der Leiste (200, 230) für den Abgasdiffusor (10) nach einem der vorhergehenden Ansprüche 1 bis 5, wobei die Leiste (200, 210, 230) die nutförmige Leiste (230) ist, die ferner Folgendes umfasst:

   eine Unternut (233), die mit der nutförmigen Leiste (230) auf der Strebe (100) verbunden ist und in der Strömungsrichtung des Abgases (E) angeordnet ist, um das Auftreten der Längswirbel (G2) des Abgases (E) zu verstärken, wobei die Unternut Folgendes umfasst:

      einen gekrümmten Abschnitt (234), der mit der nutförmigen Leiste (230) verbunden ist; und einen linearen Abschnitt (235), der mit dem gekrümmten Abschnitt (234) verbunden ist, und in der Strömungsrichtung des Abgases (E) angeordnet ist.

10. Strebenstruktur mit der Leiste (200, 230) für den Abgasdiffusor (10) nach einem der vorhergehenden Ansprüche 1 bis 5 oder Anspruch 9, wobei die Leiste (200, 210, 230) die nutförmige Leiste (230) ist, die ferner Folgendes umfasst:

    einen Erweiterungsausschnittsabschnitt (237), der mit der nutförmigen Leiste (230) an der Vorderkante (110) der Strebe (100) verbunden ist und sich mehr als eine Breite der nutförmigen Leiste (230) erweitert, um das Auftreten der Eckenwirbel (G1) des Abgases (E) an der Vorderkante (110) der Strebe (100) zu verstärken.

11. Gasturbine (1), die Folgendes umfasst:

    einen Kompressorabschnitt (4), der konfiguriert ist, Luft zu komprimieren; eine Brennkammervorrichtung (5), die konfiguriert ist, die komprimierte Luft mit Brennstoff zu mischen und die Luft- und Brennstoffmischung zu verbrennen;

einen Turbinenabschnitt (6), der konfiguriert ist, mit dem Verbrennungsgas, das von der Brennkammervorrichtung (5) ausgestoßen wird, Leistung zu erzeugen; und

einen Abgasdiffusor (10), der konfiguriert ist, das Verbrennungsgas auszustoßen, das durch den Turbinenabschnitt (6) als Abgas (E) nach außen strömt,

wobei der Abgasdiffusor (10) eine Strebenstruktur nach einem der vorhergehenden Ansprüche aufweist.

## Revendications

1. Structure d'entretoises avec une bande (200, 210, 230) pour un diffuseur d'échappement (10) d'une turbine à gaz (1) comportant :

une pluralité d'entretoises (100) disposées le long d'une circonférence extérieure d'un corps de diffuseur (20) disposé sur un côté central du diffuseur d'échappement (10) ; et
une ou plusieurs bandes (200, 210, 230) formées sur l'entretoise (100),
**caractérisée en ce que** :

la bande (200, 210, 230) est une bande de type saillie (210) faisant saillie vers l'extérieur à partir de l'entretoise (100) ou une bande de type rainure (230) évidée vers l'intérieur à partir de l'entretoise (100) ; et
la bande (200, 210, 230) est formée sur l'entretoise (100) parallèlement à une direction d'écoulement du gaz d'échappement (E) et la bande (200, 210, 230) a une forme de section transversale rectangulaire dans un plan perpendiculaire à la direction d'écoulement du gaz d'échappement (E) de telle sorte qu'un gaz d'échappement (E) passant à travers l'entretoise (100) s'écoule le long de la bande (200, 210, 230) à partir d'un bord d'attaque (110) de l'entretoise (100) pour adoucir un phénomène d'écoulements séparés.

2. Structure d'entretoises avec une bande (200, 210, 230) pour le diffuseur d'échappement (10) de la revendication 1,

dans laquelle lorsque la bande (200, 210, 230) est la bande de type saillie (210), le gaz d'échappement (E) pénètre dans le bord attaque (110) de l'entretoise (100) et s'écoule entre des bandes voisines (200, 210, 230) en formant des vortex de coin (G1) sur le bord d'attaque (110) de l'entretoise (100), et lorsque le gaz d'échappement (E) s'écoule le long de la bande (200, 210, 230), une résistance à l'écoulement due à un frottement sur une surface de frontière (200a) de la bande (200) est générée en formant des vortex dans le flux (G2) pour adoucir une perte de pression du gaz d'échappement (E) ; ou
dans laquelle lorsque la bande (200, 210, 230) est une bande de type rainure (230), le gaz d'échappement (E) s'écoulant jusqu'à l'entretoise (100) pénètre dans la bande de type rainure (230) en formant des vortex de coin (G1), et tout en s'écoulant le long de l'intérieur de la bande de type rainure (230), les vortex dans le flux (G2) apparaissent en raison du frottement avec une surface de frontière de la bande de type rainure (230).

3. Structure d'entretoises avec la bande (200, 210, 230) pour le diffuseur d'échappement (10) selon l'une quelconque des revendications précédentes,

dans laquelle si une longueur du bord d'attaque (110) de l'entretoise (100) jusqu'à un bord de fuite (120) de celle-ci est désignée c,
une hauteur h de la bande (200, 210, 230) est formée à un rapport dans une plage de $0 \leq h/c \leq 0,005$.

4. Structure d'entretoises avec la bande (200, 210, 230) pour le diffuseur d'échappement (10) de la revendication 3,
dans laquelle une largeur w de la bande (200, 210, 230) est formée à un rapport dans une plage de $0,017 \leq w/c \leq 0,05$.

5. Structure d'entretoises avec la bande (200, 210, 230) pour le diffuseur d'échappement (10) de la revendication 3 ou 4,

dans laquelle les bandes (200, 210, 230) sont disposées sur l'entretoise (100) dans une pluralité de colonnes, et
dans laquelle un espacement s entre des bandes voisines (200, 210, 230) parmi les bandes (200, 210, 230) disposées dans la pluralité de colonnes est formé à un rapport dans une plage de $0,05 \leq s/c \leq 0,27$.

6. Structure d'entretoises avec la bande (200, 210) pour le diffuseur d'échappement (10) selon l'une quelconque des revendications précédentes, dans laquelle la bande (200, 210, 230) est une bande de type saillie (210), comportant en outre :
des sous-saillies (212) disposées espacées dans une direction longitudinale de la bande de type saillie (210) pour renforcer l'occurrence des vortex dans le flux (G2) du gaz d'échappement (E).

7. Structure d'entretoises avec la bande (200, 210) pour le diffuseur d'échappement (10) de la revendication 6, dans laquelle les bandes de type saillie (210) sont disposées sur l'entretoise (100) dans une pluralité de colonnes, et

dans laquelle les sous-saillies (212) sont disposées pour se faire face les unes aux autres à des emplacements correspondant les uns aux autres entre des bandes (210) voisines parmi les bandes de type saillie (210) et/ou les sous-saillies (212) sont disposées à des emplacements irréguliers entre des bandes (210) voisines parmi les bandes de type saillie (210).

8. Structure d'entretoises avec la bande (200, 210) pour le diffuseur d'échappement (10) selon l'une quelconque des revendications précédentes, dans laquelle la bande (200, 210, 230) est une bande de type saillie (210),

dans laquelle un bloc d'induction de vortex (214) relié à la bande de type saillie (210) sur le bord d'attaque (110) de l'entretoise (100) est disposé pour renforcer l'occurrence des vortex de coin (G1) du gaz d'échappement (E),
dans laquelle le bloc d'induction de vortex comporte une ou plusieurs parties d'inflexion (215).

9. Structure d'entretoises avec la bande (200, 230) pour le diffuseur d'échappement (10) selon l'une quelconque des revendications 1 à 5 précédentes, dans laquelle la bande (200, 210, 230) est une bande de type rainure (230), comportant en outre :

une sous-rainure (233) reliée à la bande de type rainure (230) sur l'entretoise (100) et disposée dans la direction d'écoulement du gaz d'échappement (E) pour adoucir l'occurrence des vortex dans le flux (G2) du gaz d'échappement (E),
dans laquelle la sous-rainure comporte :

une partie incurvée (234) reliée à la bande de type rainure (230) ; et
une partie linéaire (235) reliée à la partie incurvée (234) et disposée dans la direction d'écoulement du gaz d'échappement (E).

10. Structure d'entretoises avec la bande (200, 230) pour le diffuseur d'échappement (10) selon l'une quelconque des revendications 1 à 5 précédentes ou la revendication 9, dans laquelle la bande (200, 210, 230) est la bande de type rainure (230), comportant en outre :
une partie découpée d'expansion (237) reliée à la bande de type rainure (230) sur le bord d'attaque (110) de l'entretoise (100) et s'étendant plus qu'une largeur de la bande de type rainure (230) pour renforcer l'occurrence des vortex de coin (G1) du gaz d'échappement (E) sur le bord d'attaque (110) de l'entretoise (100).

11. Turbine à gaz (1) comportant :

une section de compresseur (4) configurée pour comprimer de l'air ;
une chambre de combustion (5) configurée pour mélanger l'air comprimé avec du combustible et pour brûler le mélange d'air et de combustible ;
une section de turbine (6) configurée pour produire de la puissance avec le gaz de combustion évacué de la chambre de combustion (5) ; et
un diffuseur d'échappement (10) configuré pour évacuer le gaz de combustion passant à travers la section de turbine (6) vers l'extérieur sous forme de gaz d'échappement (E),
le diffuseur d'échappement (10) ayant une structure d'entretoises selon l'une quelconque des revendications précédentes.

[FIG. 1]

**Related Art**

[FIG. 2]

[FIG. 3]

[FIG. 4]

[FIG. 5]

[FIG. 6]

[FIG.7]

[FIG.8]

**• Lift and drag coefficients**

[FIG.9]

[FIG. 10]

[FIG. 11]

[FIG. 12]

(a)

(b)

[FIG. 13]

[FIG. 14]

**EP 3 835 546 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190167192
- US 2014060062 A1
- US 2013164488 A1
- WO 2005100752 A1
- EP 0970292 A1